# DEMANDE DE BREVET EUROPEEN

(11) **EP 4 765 739 A1**
(43) Date de publication de la demande: **24.06.2026**
(21) Numéro de dépôt: 25225094.9
(22) Date de dépôt: 18.12.2025
(51) Int. Cl.: H04L 9/40, H04L 45/24, H04L 45/745, H04L 45/50

(54) **PROCÉDÉ DE COMMUNICATION, SYSTÈME ET ARCHITECTURE ASSOCIÉS**

(30) Priorité: 20.12.2024 FR 2414934
(71) Demandeur: THALES, 92190 Meudon (FR)
(72) Inventeur: LEMOINE, Dorian, 49309 CHOLET (FR); CANZILLON, Stéphane, 49309 CHOLET (FR)
(74) Mandataire: Lavoix

(57) **Abrégé**

La présente invention concerne un procédé de communication entre un nœud d'émission et un nœud cible, via un système de chiffrement comprenant une pluralité de passerelles, directement connectées entre elles via des tunnels IPsec, chaque nœud étant connecté à une passerelle, le procédé de communication comprenant une phase de transmission (P2) comprenant :
- un envoi (S202) d'un paquet de données par le nœud d'émission à la passerelle à laquelle il est connecté, dite passerelle d'émission ;
- un chiffrement (S206) du paquet de données par la passerelle d'émission et un envoi, du paquet de données chiffré;
Le paquet de données est marqué (S204) par la passerelle d'émission avec une marque correspondant à un tunnel IPsec à emprunter , et l'envoi (S206) du paquet de données chiffré par la passerelle d'émission est effectué au travers du tunnel IPsec correspondant à la marque du paquet de données.

## Description

La présente invention concerne un procédé de communication, ainsi qu'un système, et une architecture associés.

Afin que deux nœuds puissent s'envoyer des paquets de données au travers de tunnels sécurisés, par exemple du type IPsec, de l'anglais « Internet Protocol Security », ou protocole de sécurité internet, il est connu d'encapsuler les adresses IP sources et destination des paquets de données échangés pour qu'ils transitent au travers du tunnel IPsec. Cependant, cela impose que les nœuds de part et d'autre du tunnel IPsec appartiennent à des sous-réseaux différents. Afin de faire communiquer des nœuds appartenant au même sous-réseau au travers d'un tunnel IPsec, une solution est d'encapsuler les paquets de données selon un protocole d'encapsulation générique de routage, ou GRE, de l'anglais « Generic Routing Encapsulation ». Cependant, une telle encapsulation réduit de manière importante le débit, car elle augmente la taille des des entêtes dus à la sur-encapsulation, et impose l'utilisation d'un pare-feu afin de contrôler les paquets entrant et sortant des tunnels IPsec, pour les envoyer au travers du bon tunnel IPsec, et au bon nœud. Cela augmente la complexité de la communication et réduit encore plus le débit.

Le but de l'invention est alors de proposer un procédé de communication permettant à des nœuds appartenant à un même sous-réseau de communiquer entre eux de manière sécurisée, simple et avec un débit important.

A cet effet, l'invention a pour objet un procédé de communication entre un nœud d'émission et un nœud cible, appartenant à une pluralité de nœuds connectés à un même sous-réseau, via un système de chiffrement, le système de chiffrement comprenant une pluralité de passerelles, directement connectées entre elles via des tunnels IPsec, chaque nœud étant connecté à une passerelle, le nœud d'émission et le nœud cible étant connectés chacun à une passerelle différente, le procédé de communication comprenant une phase de transmission comprenant :
- un envoi d'un paquet de données par le nœud d'émission à la passerelle à laquelle il est connecté, dite passerelle d'émission ;
- un chiffrement du paquet de données par la passerelle d'émission et un envoi, par la passerelle d'émission, du paquet de données chiffré à la passerelle à laquelle est connecté le nœud cible, dite passerelle cible ;
- un déchiffrement du paquet chiffré et l'envoi du paquet de données déchiffré au nœud cible par la passerelle cible.

Selon l'invention, le paquet de données est marqué par la passerelle d'émission avec une marque correspondant à un tunnel IPsec à emprunter connectant la passerelle d'émission et la passerelle cible, et l'envoi du paquet de données chiffré par la passerelle d'émission à la passerelle cible est effectué au travers du tunnel IPsec correspondant à la marque du paquet de données.

Grâce à l'invention, pour une communication entre deux nœuds dans le même sous réseau via un tunnel IPsec, il n'est pas nécessaire d'encapsuler les paquets de données selon un protocole GRE avant de les envoyer à la passerelle cible via le tunnel IPsec. Ainsi, il est possible d'obtenir un débit important de paquets de données.

L'absence de surencapsulation selon la protocole GRE simplifie également la communication, car il n'est pas nécessaire d'avoir des tunnels GRE en plus des tunnels IPsec.

De plus, grâce au marquage du paquet de données, la passerelle d'émission détermine simplement par quel tunnel IPsec envoyer le paquet de données. Il n'est pas nécessaire d'utiliser un pare-feu, en plus des passerelles, afin de répartir les paquets de données dans les tunnels IPsec, puisque les passerelles elles-mêmes lisent la marque associée au tunnel IPsec à travers duquel les paquets de données doivent être envoyés et envoient le paquet de données dans le tunnel IPsec correspondant à la marque. Ceci permet également d'augmenter le débit de paquets échangés.

Le chiffrement du paquet de données assure la sécurité des données lors de la communication.

Suivant d'autres aspects avantageux de l'invention, le procédé de communication comprend une ou plusieurs des caractéristiques suivantes, prises isolément ou suivant toutes les combinaisons techniquement possibles :
- la passerelle d'émission comprend une mémoire dans laquelle une table de routage est enregistrée, et le marquage, le chiffrement, l'envoi et le déchiffrement sont effectués si une route cible comprenant une adresse IP associée au nœud cible et une marque correspondant au tunnel IPsec connectant la passerelle d'émission et la passerelle cible est enregistrée dans la table de routage ;
- le procédé comprend une phase de résolution, comprenant :
   - un marquage de requêtes de résolution par la passerelle d'émission, chaque requête de résolution étant marquée avec la marque correspondant à un tunnel IPsec différent connecté à la passerelle d'émission, chaque requête comprenant une même adresse IP cible, associée au nœud cible ;
   - un chiffrement des requêtes de résolution marquées et un envoi des requêtes de résolution chiffrées par la passerelle d'émission, chaque requête étant envoyée à travers le tunnel IPsec correspondant à sa marque ;
   - un envoi de la requête de résolution aux nœuds connectés à la passerelle cible, lorsque la requête de résolution est reçue par la passerelle cible ;
   - lorsque le nœud cible reçoit la requête de résolution, un envoi par le nœud cible d'une réponse comprenant une adresse MAC du nœud cible à la passerelle cible ;
   - un marquage de la réponse avec la marque correspondant au tunnel IPsec reliant la passerelle d'émission et la passerelle cible ;
   - un chiffrement de la réponse marquée et un envoi de la réponse chiffrée à la passerelle d'émission par la passerelle cible à travers le tunnel IPsec reliant la passerelle d'émission et la passerelle cible ;
   - lorsque la passerelle cible reçoit la réponse chiffrée, un ajout dans la table de routage de la passerelle cible d'une route comprenant l'adresse IP cible et la marque du tunnel IPsec par lequel la réponse a été envoyée, cette route étant la route cible ;
- lors de la phase de résolution, la requête est générée par le nœud d'émission et envoyée à la passerelle d'émission, et la passerelle d'émission copie la requête de résolution pour obtenir plusieurs requêtes de résolution ;
- lorsque la requête est envoyée à la passerelle d'émission, si la route cible est enregistrée, une réponse comprenant une adresse MAC de la passerelle d'émission est envoyée au nœud d'émission ;
   - le procédé comprenant une phase de suppression, comprenant :
   - si l'envoi du paquet de données déchiffré au nœud cible par la passerelle cible échoue, transmission d'un paquet de données chiffré comprenant un message d'erreur à la passerelle d'émission ;
   - lorsque la passerelle d'émission reçoit le paquet de données chiffré comprenant le message d'erreur, suppression de la route cible.
   - la phase de suppression comprend en outre :
   - mesure, par la passerelle d'émission, d'une durée depuis une dernière utilisation de la route cible ; et
   - si la durée depuis la dernière utilisation de la route cible est supérieure ou égale à un seuil de durée, suppression de la route cible.
- la passerelle d'émission comprend une adresse MAC réelle et au moins une adresse MAC virtuelle, chaque adresse MAC virtuelle comprenant l'adresse MAC réelle de la passerelle d'émission et une marque correspondant au tunnel IPsec à emprunter,

dans lequel lors de l'étape d'envoi, le paquet de données comprend l'adresse IP cible associée au nœud cible, et l'une des au moins une adresses MAC virtuelles de la passerelle d'émission ; et
dans lequel lorsque la passerelle d'émission reçoit le paquet de données, si la passerelle d'émission détermine qu'une route cible statique est présente dans sa table de routage, la route cible statique comprenant l'adresse IP cible, la route cible étant dépourvue de marque, et si l'adresse MAC comprise dans le paquet de données est la ou l'une des adresses MAC virtuelle, alors, lors de l'étape de marquage, marquage du paquet de données avec une marque identique à la marque comprise dans l'adresse MAC virtuelle du paquet de données.

L'invention concerne également un système de chiffrement comprenant une pluralité de passerelles, chaque passerelle étant configurée pour être connectée à au moins un nœud, les nœuds appartenant à un même sous-réseau, les passerelles étant connectées entre elles via des tunnels IPsec, le système étant configuré pour mettre en œuvre un procédé ainsi que décrit précédemment.

Suivant d'autres aspects avantageux de l'invention, chaque passerelle est connectée à chaque autre passerelle par un tunnel IPsec.

L'invention concerne également une architecture comprenant une pluralité de nœuds, les nœuds appartenant à un même sous-réseau, et comprenant un système de chiffrement ainsi que décrit précédemment, chaque nœud étant connectée à l'une des passerelles du système.

L'invention apparaîtra plus clairement à la lecture de la description qui va suivre, donnée uniquement à titre d'exemple non limitatif, et faite en référence aux dessins dans lesquels :
- [Fig. 1] la figure 1 est un schéma d'une architecture selon un premier mode de réalisation de l'invention ;

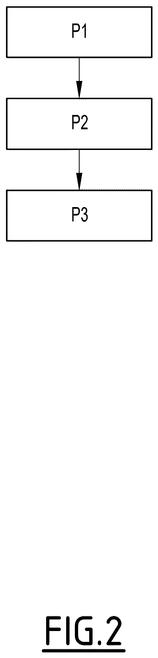

- [Fig. 2] la figure 2 est un logigramme d'un procédé de communication selon l'invention, mis en œuvre par l'architecture de la figure 1 ;

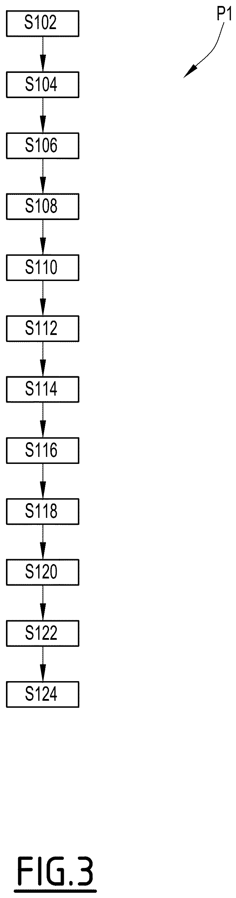

- [Fig. 3] la figure 3 est un logigramme d'une phase de résolution du procédé de communication représenté sur la figure 2 ;

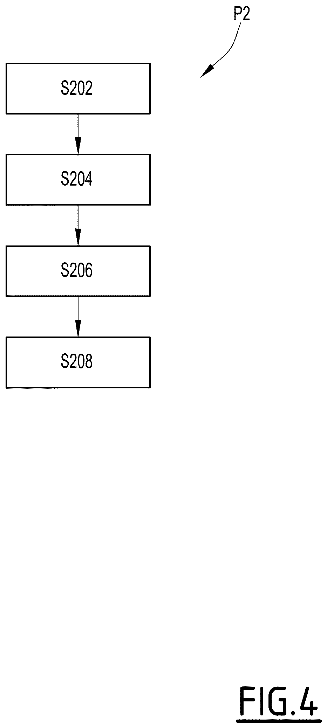

- [Fig. 4] la figure 4 est un logigramme d'une phase de transmission du procédé de communication représenté sur la figure 2 ;

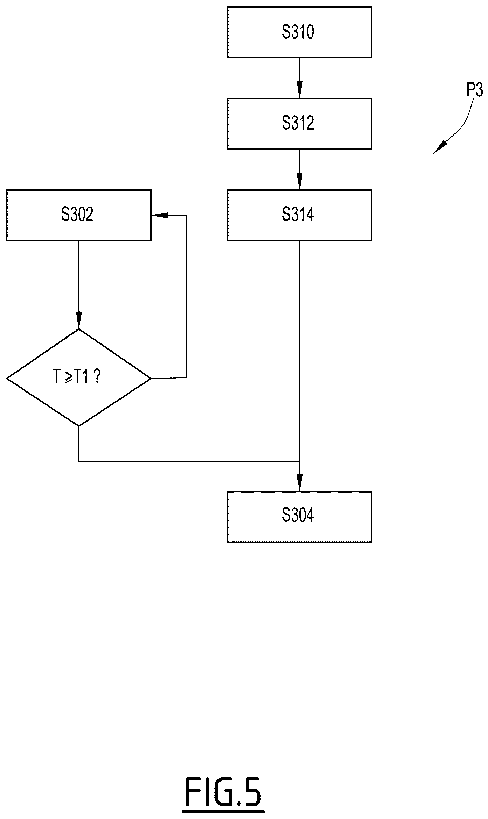

- [Fig. 5] la figure 5 est un logigramme d'une phase de suppression du procédé de communication représenté sur la figure 2 ; et
- [Fig. 6] la figure 6 est un schéma d'une architecture selon un deuxième mode de réalisation de l'invention.
- [Fig. 7] la figure 7 est un schéma d'une architecture selon un troisième mode de réalisation de l'invention.

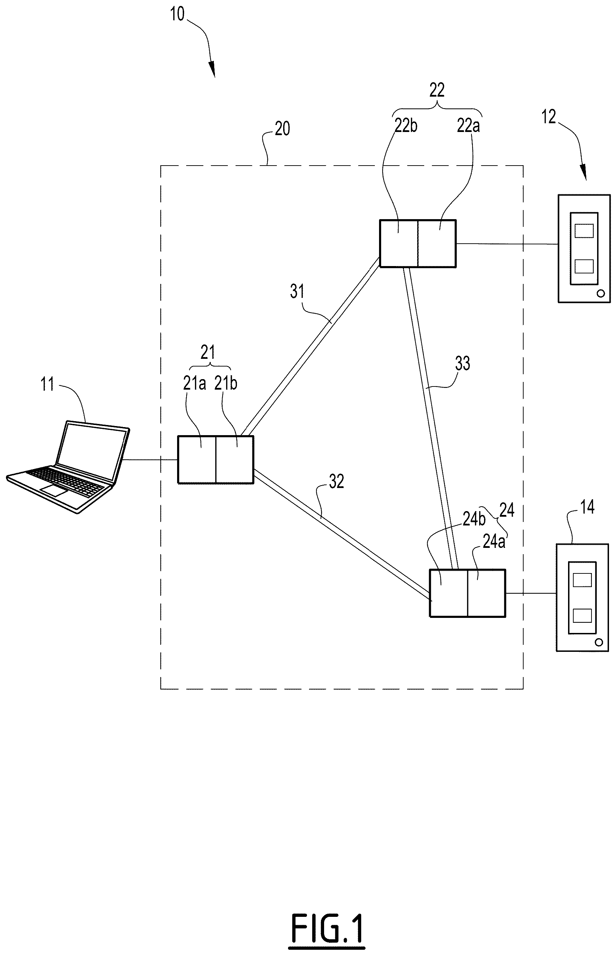

La figure 1 est un schéma d'une architecture 10 comprenant une pluralité de nœuds 11, 12, 14. Les nœuds 11, 12 et 14 appartiennent à un même sous-réseau, c'est-à-dire qu'ils ont la même adresse de réseau et le même masque de sous-réseau, ou « subnet mask » en anglais, dans le protocole IP ou « Internet Protocol » en anglais. Le sous-réseau est caractérisé par une plage d'adresses IP utilisables dans un réseau donné, ce dernier étant par exemple un réseau étendu ou WAN, de l'anglais « Wide Area Network », qui est par exemple le réseau Internet. Le sous-réseau est par exemple du réseau d'une entreprise, dont les sites sont répartis sur différents zones géographiques

Les nœuds 11, 12 et 14 représentent par exemple des périphériques comme des serveurs, des routeurs, des ordinateurs ou des calculateurs, qui ont besoin de s'échanger des informations.

Chaque nœud 11, 12 et 14 comprend avantageusement une adresse physique, ou adresse MAC, de l'anglais « Media Control Access ». Avantageusement, une adresse de protocole internet, plus généralement connue sous le nom d'adresse IP, de l'anglais « Internet Protocol » est associée à chaque nœud 11, 12, 14 lorsqu'il est connecté au sous-réseau. Notamment, de manière connue, l'adresse IP d'un nœud 11, 12, 14 peut changer par exemple en cas de nouvelle connexion du nœud 11, 12, 14 au sous-réseau, alors que l'adresse MAC est fixe pour chaque nœud 11, 12, 14.

Les nœuds 11, 12, 14 sont connectés au même sous-réseau via un système de chiffrement 20.

Le système de chiffrement 20 comprend une pluralité de passerelles 21, 22, 24, appelées également « gateways » en anglais. Chaque passerelle 21, 22, 24 comprend avantageusement une interface externe 21a, 22a, 24a, configurée pour être connectée avec un nœud 11, 12, 14, et une interface interne 21b, 22b, 24b, configurée pour être connectée aux autres interfaces internes des passerelles 21, 22, 24.

Chaque nœud 11, 12, 14 est connecté à une passerelle 21, 22, 24. En particulier, chaque nœud 11, 12, 14 est connecté à une unique passerelle. Dans l'exemple de la figure 1, le nœud 11 est connecté à la passerelle 21, le nœud 12 est connecté à la passerelle 22 et le nœud 14 est connecté à la passerelle 24. Avantageusement, et ainsi que représenté à la figure 1, chaque nœud 11, 12 et 14 est connecté à une interface externe, respectivement 21a, 22a et 24a.

Les passerelles 21 , 22 et 24 sont directement connectées entre elles par des tunnels IPsec 31, 32, 33, de l'anglais « Internet Protocol Security », ou protocole de sécurité internet. Par « directement connectées entre elles » par les tunnels IPsec 31, 32, 33, on entend que les tunnels IPsec 31, 32, 33 sont établis entre les passerelles 21, 22 et 24, sans dispositif intermédiaire. Avantageusement, et ainsi que représenté à la figure 1, les interfaces internes 21b, 22b, 24b des passerelles 21, 22, 24 sont reliées par les tunnels IPsec 31, 32, 33.

Avantageusement, deux passerelles données sont connectées entre elles par au plus un tunnel IPsec. Avantageusement, chaque passerelle est connectée à chaque autre passerelle, ainsi que représenté à la figure 1, où les passerelles 21 et 22 sont connectées entre elles par le tunnel IPsec 31, les passerelles 21 et 24 sont connectées entre elles par le tunnel IPsec 32 et les passerelles 22 et 24 sont connectées entre elles par le tunnel IPsec 33. Cette configuration est dite configuration « full mesh » ou maillage complet.

Les passerelles 21, 22, 24 sont configurées pour recevoir des paquets de données depuis les nœuds 11, 12, 14 et pour envoyer des paquets de données entre elles via les tunnels IPsec 31, 32, 33.

Chaque passerelle 21, 22, 24 est configurée pour marquer les paquets de données qu'elle reçoit avec une marque correspondant à un tunnel IPsec à emprunter, auquel est connecté la passerelle 21, 22, 24. Le marquage d'un paquet est par exemple l'ajout d'une métadonnée éphémère, qui ne modifie pas le paquet. La marque est par exemple une série de caractères alphanumériques et/ou de symboles.

Selon un exemple, la passerelle 21 est configurée pour marquer un paquet de données soit avec une marque indiquant le tunnel IPsec 31, appelée mark_1, soit avec une marque indiquant le tunnel IPsec 32, appelée mark_2 et la passerelle 22 est configurée pour marquer un paquet de données soit avec la marque mark_1, soit avec une marque indiquant le tunnel IPsec 33, appelée mark_3. Ainsi, à chaque tunnel IPsec 31, 32, 33 correspond une marque mark_1, mark_2, mark_3 respective, la correspondance étant directe.

En variante, la marque correspondant à un tunnel IPsec à emprunter indique une passerelle de destination. Par exemple, la passerelle 21 est configurée pour marquer un paquet de données qu'elle reçoit soit avec une marque correspondant à la passerelle 22, appelée mark_22, lorsque le paquet de données est à destination de la passerelle 22, soit avec une marque correspondant à la passerelle 24, appelée mark_24, lorsque le paquet de données est à destination de la passerelle 24. La passerelle détermine, à partir de la marque, le tunnel IPsec à emprunter. Chaque passerelle de destination étant connectée via un tunnel IPsec à la passerelle ayant reçu le paquet de données, la marque correspondant à la passerelle de destination permet d'identifier le tunnel IPsec à emprunter. Ainsi, dans le cas où la passerelle ayant reçu le paquet de données est la passerelle 21, la marque mark_22 correspond au tunnel IPsec 31, puisque le tunnel IPsec 31 relie les passerelles 21 et 22, et la marque mark_24 correspond au tunnel IPsec 32. Dans le cas où la passerelle ayant reçu le paquet de données est la passerelle 22, une marque mark_21, indiquant que la passerelle 21 est la passerelle de destination, correspond tunnel IPsec 31 et la marque mark_24 correspond au tunnel IPsec 33. Les marques mark_21, mark_22 et mark_24 correspondent ainsi à un tunnel IPsec à emprunter, de manière indirecte, et en fonction de la passerelle ayant reçu le paquet de données considérée.

Les données formant les paquets de données sont par exemple des images, des vidéos ou encore des données de capteurs. Elles sont par exemple enregistrées dans un serveur connecté au sous-réseau, et un utilisateur connecté à distance souhaite avoir accès à ces données, qui doivent alors être envoyées jusqu'à son ordinateur, également connecté au sous-réseau.

Les paquets de données comprennent avantageusement des couches organisées selon le modèle OSI, de l'anglais « Open Systems Interconnection ».

Avantageusement, chaque passerelle 21, 22, 24 est configurée pour marquer des requêtes, par exemple des requêtes de résolution, ou encore des réponses, de manière similaire à ce qui a été décrit pour les paquets de données.

Avantageusement, chaque passerelle 21, 22, 24 est configurée pour chiffrer les paquets de données, et le cas échéant les requêtes et/ou les réponses, selon un protocole IPsec.

Chaque passerelle 21, 22, 24 est donc configurée pour envoyer un paquet de données et, le cas échéant, une requête et/ou une réponse au travers du tunnel IPsec à emprunter, correspondant à la marque du paquet de données, ou le cas échéant, de la requête et/ou de la réponse. A cet effet, chaque passerelle 21, 22, 24 comprend avantageusement un sélecteur de trafic, configuré pour sélectionner le tunnel IPsec à emprunter en fonction de la marque sur le paquet de données, la requête et/ou la réponse. Plus précisément, le sélecteur de trafic est configuré pour déterminer la marque sur le paquet de données, la requête et/ou la réponse et sélectionner le tunnel à emprunter, c'est-à-dire le tunnel dans lequel envoyer le paquet de données, la requête et/ou la réponse en fonction de la marque. Le paquet de données, la requête et/ou la réponse est ensuite chiffré et envoyé par la passerelle à travers le tunnel IPsec correspondant au tunnel IPsec à emprunter sélectionné.

Avantageusement, chaque nœud 11, 12, 14 comprend une mémoire dans laquelle une table d'aiguillage est enregistrée. Cette table d'aiguillage comprend une liste d'adresses IP distantes, associées à l'adresse MAC de la passerelle à laquelle le nœud est connecté.

Une adresse IP distante est distante par rapport à un nœud donné, qui est associé à une adresse IP donnée. L'adresse IP distante correspond alors à une adresse IP à laquelle des données ne peuvent être envoyées qu'en les envoyant au préalable à une passerelle distincte de la passerelle à laquelle est connecté le nœud donné. Pour un nœud donné, les adresses IP locales sont les adresses auxquelles des données peuvent être envoyées par la passerelle à laquelle est connecté le nœud donné, sans passer par une autre passerelle.

Chaque passerelle 21, 22, 24 comprend avantageusement une table de routage comprenant une liste de routes, chaque route comprenant une adresse IP et la marque correspondant au tunnel IPsec par lequel les données doivent transiter pour atteindre un nœud connecté à cette adresse IP. Avantageusement, la route est représentée dans la notation CIDR, de l'anglais « Classless Inter-Domain Routing » par l'adresse IP suivie de « /32 ». La route est ainsi propre à chaque nœud que l'on souhaite atteindre.

Chaque passerelle 21, 22, 24 comprend en outre, de manière avantageuse, une table d'adresses, comprenant une liste d'adresses IP locales et pour chaque adresse IP locale, l'adresse MAC du nœud associé à cette adresse IP locale.

Un procédé de communication entre les nœuds 21, 22, 24 est maintenant expliqué. Ce procédé est mis en œuvre par l'architecture 10.

Le procédé de communication comprend avantageusement une phase de résolution P1. La phase de résolution P1 est mise en œuvre de manière automatique par l'architecture 10, ou en variante, seulement lorsqu'un nœud appartenant à la pluralité de nœuds 11, 12, 14, par exemple le nœud 11, dit nœud d'émission, souhaite envoyer un paquet de données à un nœud d'adresse MAC inconnue et associé à une adresse IP connue, dite adresse IP cible. La phase de résolution P1 comprend des étapes S102 à S124.

Le nœud d'émission 11 souhaite connaître l'adresse MAC du nœud, dit nœud cible, connecté à l'adresse IP cible, le nœud d'émission 11 connaissant l'adresse IP cible. Le nœud cible est par exemple le nœud 12.

Lors de la phase de résolution P1, une requête de résolution, également appelée simplement requête, est générée par le nœud d'émission 11 lors d'une étape de génération S102. La requête comprend l'adresse IP cible et une demande d'adresse MAC du nœud cible associé à l'adresse IP cible.

Avantageusement, l'étape de génération S102 est réalisée lorsque la table d'aiguillage du nœud d'émission 11 ne comprend pas d'adresse MAC associée à l'adresse IP cible, ou ne comprend pas l'adresse IP cible.

La requête est envoyée par le nœud d'émission 11 à la passerelle 21 à laquelle il est connecté, appelée par la suite passerelle d'émission, lors d'une étape d'envoi S104. Avantageusement, la requête est envoyée par le nœud d'émission 11 à l'interface externe 21a de la passerelle d'émission 21.

Lors d'une étape de copie S106, la passerelle d'émission 21 copie la requête de résolution, pour obtenir plusieurs requêtes de résolution, toutes comprenant la même adresse IP cible. Avantageusement, l'étape de copie S106 a lieu lorsque la table de routage de la passerelle d'émission 21 ne comprend pas de route comprenant l'adresse IP cible.

La passerelle d'émission 21 marque chaque requête de résolution avec une marque correspondant à un tunnel IPsec différent connecté à la passerelle d'émission 21 lors d'une étape de marquage S108.

Par exemple, lors de l'étape S108, la passerelle d'émission 21 marque une première requête de résolution issue de l'étape S106 de copie avec la marque mark_1 correspondant au tunnel IPsec 31, et une deuxième requête de résolution avec la marque mark_2 correspondant au tunnel IPsec 32.

Puis lors d'une étape de transmission S110, les requêtes de résolution sont chiffrées selon le protocole IPsec, et la première requête de résolution chiffrée est envoyée à travers le tunnel IPsec 31 et la deuxième requête de résolution chiffrée est envoyée à travers le tunnel IPsec 32.

Avantageusement, le sélecteur de trafic sélectionne le tunnel IPsec correspondant à la marque sur chacune des requêtes de résolution chiffrées, retire la marque. La passerelle d'émission envoie ensuite chaque requête de résolution chiffrée dans le tunnel IPsec correspondant à la marque, respectivement le tunnel IPsec 31 et le tunnel IPsec 32.

Les passerelles connectées à la passerelle d'émission 21 via un tunnel IPsec, ici les passerelles 22 et 24, reçoivent les requêtes de résolution chiffrées et les déchiffrent lors d'une étape de réception S112. Avantageusement, les passerelles 22 et 24 déterminent si leur table d'adresse comprend l'adresse IP cible et l'adresse MAC associée.

Si ce n'est pas le cas, alors les passerelles 22 et 24 envoient la requête de résolution respectivement aux nœuds 12 et 14 auxquels elles sont connectées lors d'une étape d'envoi S114. Avantageusement, les requêtes de résolution sont envoyées via les interfaces externes 22a et 24a.

Lorsque le nœud cible, ici le nœud 12, associé à l'adresse IP cible, reçoit la requête, il génère une réponse comprenant l'adresse MAC du nœud cible 12 et l'envoie à la passerelle cible 22, avantageusement à l'interface externe 22a de la passerelle 22, lors d'une étape d'envoi S116. Avantageusement, la réponse comprend en outre l'adresse IP associée au nœud d'émission, afin qu'elle puisse être envoyée au nœud d'émission 11.

La passerelle cible 22 marque la réponse avec la marque mark_1, correspondant à la marque du tunnel IPsec à emprunter, qui est ici le tunnel IPsec 31 qui relie la passerelle d'émission 21 et la passerelle cible 22, lors d'une étape de marquage S118.

La passerelle cible 22 chiffre la réponse et l'envoie dans le tunnel IPsec 31, correspondant à la marque mark_1 de la réponse chiffrée, lors d'une étape de transmission S120. Avantageusement, lors de l'étape de transmission S120, le sélecteur de trafic détermine que la marque est la marque mark_1, sélectionne le tunnel IPsec 31, correspondant à la marque_mark_1 et retire la marque. La passerelle cible 22 chiffre alors la réponse et envoie la réponse chiffrée dans le tunnel IPsec 31.

Si la passerelle 22 détermine que sa table d'adresse comprend l'adresse IP cible et l'adresse MAC associée, la passerelle cible 22 n'effectue pas l'étape S114, génère la réponse et effectue l'étape S118.

En variante, lorsque la passerelle cible 22 a reçu la réponse du nœud cible 12, la passerelle cible 22 transmet la réponse à toutes les passerelles auxquelles elle est connectée via un tunnel IPsec, c'est-à-dire à la passerelle d'émission 21 et à la passerelle 24, en copiant la réponse, en marquant chaque réponse avec respectivement la marque mark_1 et mark_3 lors de l'étape S118, et lors de l'étape de transmission S120, en chiffrant chaque réponse copiée et en envoyant les réponses chiffrées dans les tunnels IPsec 31 et 33. Avantageusement lors de l'étape de transmission S120, le sélecteur de trafic sélectionne le tunnel correspondant à la marque sur la réponse, retire la marque, et la passerelle cible 22 chiffre la réponse et envoie la réponse chiffrée dans le tunnel IPsec correspondant, respectivement le tunnel IPsec 31 et le tunnel IPsec 33.

Lorsque la passerelle d'émission 21 reçoit la réponse chiffrée, elle déchiffre la réponse chiffrée et effectue une étape d'ajout S122, lors de laquelle elle ajoute dans sa table de routage une route, dite route cible, comprenant l'adresse IP cible et la marque du tunnel IPsec 31 par lequel la réponse chiffrée a été envoyée. Avantageusement, la route cible comprend l'adresse IP cible représentée dans la notation CIDR suivie de « /32 » et la marque mark_1, du tunnel IPsec 31 par lequel la réponse chiffrée a été envoyée.

L'étape d'ajout S122 comprend en outre l'ajout de l'adresse IP cible et de l'adresse MAC de la passerelle d'émission 21 à la table d'aiguillage du nœud d'émission 11, de telle sorte que l'adresse IP cible soit associée à l'adresse MAC de la passerelle d'émission 21.

En variante, c'est la passerelle d'émission 21 qui génère directement les requêtes de résolution d'une adresse IP cible, et les étapes de génération S102, d'envoi S104 et de copie S106 ne sont pas effectuées. C'est par exemple le cas lorsque la table d'aiguillage du nœud d'émission 11 comprend une entrée avec l'adresse IP cible associée à l'adresse MAC de la passerelle d'émission 21, mais que la route cible, comprenant l'adresse IP cible, n'existe pas dans la table de routage de la passerelle d'émission 21.

Avantageusement, suite aux étapes S102 de génération et S104 d'envoi, si la passerelle d'émission 21 détermine que sa table de routage comprend la route cible, alors la passerelle d'émission 21 effectue directement l'étape S120 et ajoute l'adresse MAC de la passerelle d'émission 21 à la table d'aiguillage du nœud d'émission 11, sans ajouter la route cible dans sa table de routage, puisqu'elle est déjà présente.

Selon une variante optionnelle, les requêtes émises lors de la phase de résolution P1 sont des requêtes ARP, de l'anglais « Address Resolution Protocol ».

De manière optionnelle, une fois l'étape d'ajout S122 effectuée, une étape S124 de conclusion est réalisée.

Le procédé comprend une phase de transmission P2. La phase de transmission P2 a avantageusement lieu après la phase de résolution P1. La phase de transmission P2 comprend avantageusement des étapes S202 à S208.

Lors d'une étape d'envoi S202, le nœud d'émission 11 envoie un paquet de données à la passerelle d'émission 21, avantageusement sur l'interface 21a de la passerelle d'émission 21. Le paquet de données comprend avantageusement l'adresse IP cible, qui est l'adresse IP à laquelle le nœud d'émission 11 souhaite envoyer le paquet de données, ainsi que l'adresse MAC de la passerelle d'émission 21, qui est associée à l'adresse IP cible dans la table d'aiguillage du nœud d'émission 11.

Lorsque la passerelle d'émission 21 reçoit le paquet de données, elle détermine si la route cible, comprenant l'adresse IP cible et la marque du tunnel IPsec 31 est présente dans sa table de routage. Si ce n'est pas le cas, la phase de résolution P1 est effectuée afin d'ajouter la route cible dans la table de routage de la passerelle 21, et c'est la passerelle d'émission 21 qui génère directement les requêtes de résolution pour une adresse IP cible, et les étapes de génération S102, d'envoi S104 et de copie S106 ne sont pas effectuées.

Si la route cible est présente dans la table de routage de la passerelle d'émission 21, la passerelle d'émission 21 marque le paquet de données avec une marque identique à la marque comprise dans la route cible, c'est-à-dire avec la marque mark_1, lors d'une étape de marquage S204.

La passerelle d'émission 21 effectue ensuite une étape S206 de transmission du paquet de données, dans laquelle le paquet de données est chiffré par la passerelle d'émission 21 et envoyé à la passerelle cible 22 à travers le tunnel IPsec 31 correspondant à la marque mark_1 du paquet de données chiffré. Avantageusement, et ainsi que décrit pour les requêtes et les réponses, lors de l'étape de transmission S206, le sélecteur de trafic détermine que la marque est mark_1 sélectionne le tunnel dans lequel envoyer le paquet, ici le tunnel IPsec 31, et retire la marque. La passerelle d'émission 21 chiffre ensuite le paquet de données et envoie le paquet de données chiffré dans le tunnel IPsec 31.

Lorsque la passerelle cible 22 reçoit le paquet de données chiffré, elle déchiffre le paquet de données chiffré lors d'une étape de déchiffrement S208, et envoie le paquet de données, désormais déchiffré, au nœud cible 12 lors d'une étape d'envoi S210.

Avantageusement, le procédé de communication comprend une phase de suppression P3, qui comprend des étapes S302 à S314.

La passerelle d'émission 21 mesure une durée T pendant laquelle aucun paquet de données n'a été envoyé à destination de l'adresse IP cible pendant une étape de mesure S302. Autrement dit, la durée T est la durée depuis la dernière utilisation de la route cible. Si la durée T est supérieure ou égale à une durée prédéterminée T1, alors la passerelle d'émission 21 effectue une étape de suppression S304 de la route cible de sa table de routage.

En variante ou en complément, si, lors de la phase P2, l'étape d'envoi S210 échoue, c'est-à-dire que la passerelle cible 22 n'arrive pas à envoyer le paquet de données au nœud cible 12, alors la phase de suppression P3 est mise en œuvre. La passerelle cible 22 génère un paquet de données comprenant un message d'erreur lors d'une étape de génération S310.

L'échec de l'étape d'envoi S210 est par exemple causée par une déconnexion du nœud cible du sous réseau, ou par un changement d'adresse IP du nœud cible 21.

Le paquet de données comprenant le message d'erreur est simplement appelé message d'erreur par la suite.

Le message d'erreur comprend des instructions à destination de la passerelle d'émission 21 pour supprimer la route cible de sa table de routage.

Le message d'erreur est marqué par la marque du tunnel IPsec 31 par lequel le paquet de données qui n'a pas été transmis au nœud cible 12 a été envoyé à la passerelle cible 22 lors d'une étape de marquage S312, et est transmis à la passerelle d'émission 21 lors d'une étape de transmission S314 en étant chiffré et envoyé à la passerelle d'émission 21 par le tunnel IPsec 31.

Lorsque la passerelle d'émission 21 reçoit le message d'erreur chiffré, elle le déchiffre et effectue l'étape de suppression S304.

La phase P3 permet ainsi de supprimer les routes qui ne sont plus utilisées, et, en variante ou en complément, de supprimer les routes qui ne permettent pas d'envoyer les paquets de données au nœud cible.

Dans le cas d'un changement d'adresse IP du nœud cible 12, suite à la phase P3, si le nœud 11 souhaite envoyer un nouveau paquet de données au nœud cible 12, la phase de résolution P1 est effectuée à nouveau.

Le procédé est décrit avec le nœud 11 comme nœud d'émission et le nœud 12 comme nœud cible. Bien entendu, n'importe quels autres nœuds du sous-réseau peuvent être choisis comme nœuds d'émission et nœuds cible, pourvu qu'ils soient distincts. En particulier, en pratique, les nœuds du réseau sont tour à tour des nœuds d'émission et des nœuds cible, et les passerelles auxquelles les nœuds sont connectés sont tour à tour des passerelles d'émission et des passerelles cibles.

Le procédé est décrit avec l'utilisation des marques qui indiquent le tunnel IPsec à emprunter. Le procédé est identique dans le cas de l'utilisation des marques qui indiquent la passerelle de destination, le sélecteur de trafic de chaque passerelle faisant correspondre les marques et le tunnel IPsec à emprunter.

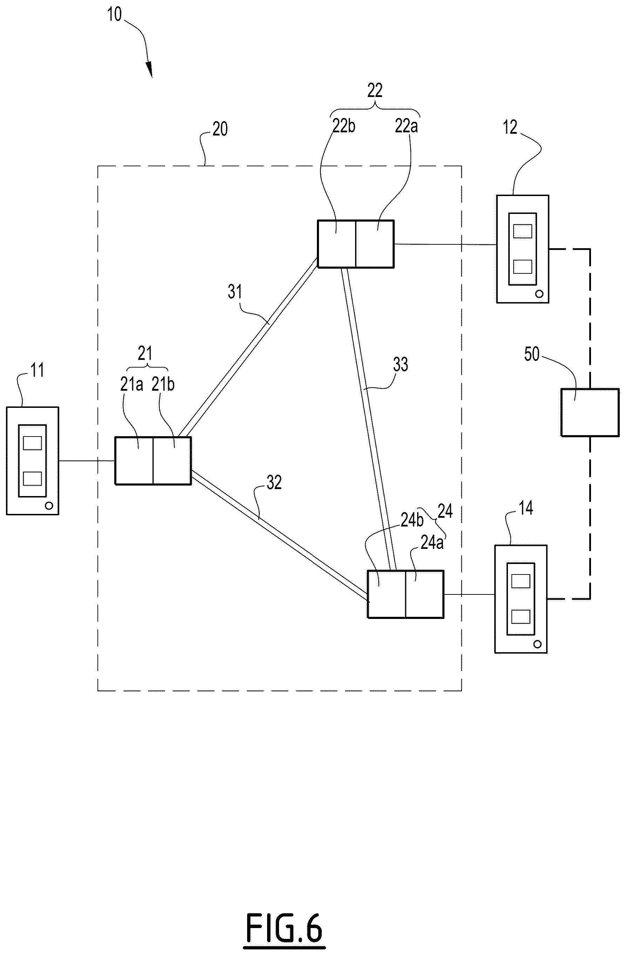

La figure 6 est un schéma d'une architecture 10 dans lequel le nœud 11 est un serveur, ou un routeur, et les nœuds 12 et 14 sont connectés à un nœud 50 qui est extérieur à l'architecture 10. En particulier, le nœud 50 appartient à un sous-réseau différent de celui auquel appartient les autres nœuds 11, 12 et 14. Le nœud 50 comprend une adresse MAC et un adresse IP, cette dernière ayant un masque de sous réseau différent de celui des nœuds 11, 12 et 14.

En outre, les nœuds 12 et 14 sont configurés pour communiquer avec le nœud 50, via par exemple des réseaux locaux, ou LAN.

Chaque nœud 12, 14, étant un routeur, il comprend en mémoire une liste d'adresses IP et les adresses MAC des nœuds respectivement connectés à chaque adresse IP. En particulier, le routeur 12 comprend en mémoire l'adresse MAC du nœud 50 ainsi que son adresse IP, et le routeur 14 comprend en mémoire l'adresse MAC du nœud 50 ainsi que son adresse IP.

Dans l'exemple de la figure 6, la passerelle 21 comprend une adresse MAC, dite adresse MAC « réelle », qui est son adresse physique, ainsi qu'au moins une, ici deux adresses MAC dites « virtuelles », afin de mettre en œuvre un routage dynamique, expliqué en détail dans la suite.

Le procédé de communication est similaire au procédé de communication décrit précédemment avec les différences décrites ci-dessous. Dans ce qui suit, le nœud 11 est le nœud d'émission et le nœud 50 le nœud cible, qui a pour adresse IP l'adresse IP cible.

Dans la phase de résolution P1, lors de l'étape de réponse S116, les routeurs 12 et 14 parcourent la liste des adresses IP enregistrés dans leurs mémoires respectives, déterminent que l'adresse IP cible est comprise dans la liste des adresses IP enregistrées, et est associée à une adresse MAC, qui est alors l'adresse MAC du nœud cible 50. Les routeurs 12 et 14 envoient alors tous les deux une réponse comprenant l'adresse MAC du nœud cible, respectivement l'adresse MAC du nœud 12, et du nœud 14. Les routeurs 12 et 14 sont alors les nœuds cibles dans le sous-réseau. Même si le nœud 50 est le « vrai » nœud cible, les routeurs 12 et 14 se comportent comme s'ils étaient les nœuds cibles. L'adresse IP cible, qui est l'adresse du nœud 50, est ainsi associée aux routeurs 12 et 14. La phase de résolution P1 a ainsi lieu entre des nœuds connectés au même sous-réseau.

Les nœuds 12 et 14 ayant tous les deux envoyé une réponse, il n'est pas possible d'ajouter dans la table de routage de la passerelle d'émission 21 une route cible. Toutefois, la passerelle d'émission 21 comprend dans sa table de routage une route cible dite « statique », comprenant notamment l'adresse IP cible, mais ne comprenant pas de marque. Cette route cible statique est avantageusement configurée à l'avance par un utilisateur.

Afin de tout de même permettre les échanges de données, lors de l'étape d'ajout S122, l'adresse IP cible, associée à deux adresses MAC virtuelles de la passerelle d'émission 21, sont ajoutées à la table d'aiguillage du nœud d'émission 11. Chaque adresse MAC virtuelle comprend l'adresse MAC réelle de la passerelle d'émission 21, ainsi qu'une information sur le tunnel IPsec à emprunter, par exemple pour de futurs échanges de données entre le nœud d'émission 11 et le nœud cible 50. Par exemple, la première adresse MAC virtuelle comprend l'adresse MAC de la passerelle 21 suivie de la marque « mark_1 », et la deuxième adresse MAC virtuelle comprend l'adresse MAC de la passerelle 21 suivie de la marque « mark_2 ». Chaque adresse MAC virtuelle correspond ainsi à un itinéraire possible des données envoyées par le nœud 11 à destination du nœud 50 : la première adresse via le tunnel IPsec 31 et la deuxième adresse via le tunnel IPsec 32.

Dans la phase de transmission P2, lors de l'étape d'envoi S202, le nœud d'émission 11 envoie un paquet de données à la passerelle d'émission 21. Le paquet de données comprend avantageusement l'adresse IP cible, ici, l'adresse IP du nœud cible 50, ainsi que l'une des deux adresses MAC virtuelles de la passerelle d'émission 21, qui est associée à l'adresse IP cible dans la table d'aiguillage du nœud d'émission 11. Avantageusement, le choix de l'adresse MAC virtuelle est prédéterminée par un utilisateur, ou, en variante, par un équipement réseau dans le cadre d'une fonction d'équilibrage de charge, qui définit par exemple un niveau de priorité, une répartition du choix entre les adresses MAC virtuelles afin d'aboutir à une répartition prédéterminée du nombre de sélections entre les deux adresses MAC, ou encore en fonction du trafic dans les tunnels IPsec 31 et 32.

Lorsque la passerelle d'émission 21 reçoit le paquet de données, elle détermine si la route cible statique, comprenant l'adresse IP cible est présente dans sa table de routage. Dans l'exemple de la figure 6, elle détermine en outre si l'adresse MAC comprise dans le paquet de données envoyé par le nœud d'émission 11 est une adresse MAC virtuelle ou non. Si l'adresse MAC est une adresse MAC virtuelle de la passerelle d'émission 21, alors, lors de l'étape de marquage S204, la passerelle d'émission 21 marque le paquet de données avec une marque identique à la marque comprise dans l'adresse MAC virtuelle. Si l'adresse MAC est l'adresse MAC réelle de la passerelle d'émission 21, l'étape de marquage S204 est réalisée comme décrit précédemment.

Dans l'exemple de la figure 6, l'adresse IP cible est l'adresse IP du nœud 50. L'adresse IP cible est également associée aux routeurs 12 et 14, qui sont les nœuds cibles dans le sous-réseau. La phase de transmission P2 a ainsi lieu entre nœuds dans le sous-réseau. La communication entre l'un des routeurs 12, 14 et le nœud 50 ne fait pas partie de la phase de transmission P2.

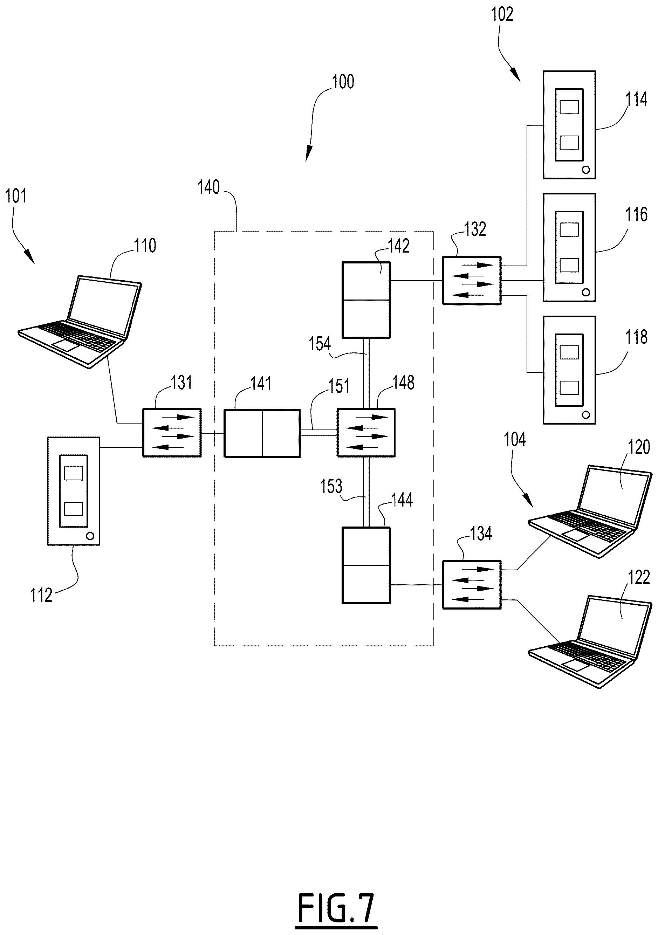

L'utilisation de routes statiques cibles et d'adresses MAC virtuelles n'est pas limité à la communication avec un nœud cible dans un sous-réseau différent, et peut être utilisé dans le cas où le nœud cible appartient au même sous-réseau que le nœud d'émission. Cela permet avantageusement de répartir l'envoi de paquets de données entre plusieurs tunnels IPsec, dans le cas où plusieurs tunnels IPSec différents peuvent être empruntés pour communiquer avec une même adresse IP cible. La figure 7 est un schéma d'une architecture 100 selon un deuxième mode de réalisation de l'invention.

L'architecture 100 comprend une pluralité de groupes 101, 102, 104 comprenant chacun des nœuds, respectivement 110, 112, pour le groupe 101, 114, 116, 118 pour le groupe 102 et 120 et 122 pour le groupe 104.

Les nœuds sont similaires aux nœuds 11, 12, 14 décrits précédemment.

Pour un groupe donné, les nœuds compris dans ce groupe sont reliés à un commutateur réseau. Les nœuds 110 et 112 sont reliés au commutateur réseau 131, les nœuds 114, 116, 118 sont connectés au commutateur réseau 132 et les nœuds 120 et 122 sont connectés au commutateur réseau 134.

Chaque nœud est connecté à un unique commutateur réseau 131, 132 ou 134.

Les nœuds 110, 112, 114, 116, 118, 120 et 122 sont connectés au même sous réseau via un système de chiffrement 140.

Les éléments du système de chiffrement 140 similaires au système de chiffrement 20 ne sont pas décrits à nouveau en détail.

Le système de chiffrement 140 comprend des passerelles 141, 142, 144, similaires, au moins fonctionnellement, aux passerelles 21, 22 et 24.

Les passerelles 141, 142 et 144 sont connectées entre elles par un commutateur réseau 148 et par des tunnels IPsec 151, 152 et 153, qui relient respectivement les passerelles 141, 142 et 144 au commutateur réseau 148.

Les passerelles 141, 142 et 144 sont connectées aux nœuds 110, 112, 114, 116, 118, 120 et 122 par l'intermédiaire des commutateurs réseau, respectivement 131, 132 et 134. En particulier, chaque passerelle 141, 142, 144 est connectée à un unique commutateur réseau 131, 132, 134.

Le procédé de communication mis en œuvre par l'architecture 100 est similaire au procédé de communication décrit précédemment pour l'architecture 10, avec les différences décrites ci-dessous.

Les envois de paquets de données, et le cas échéant de requêtes depuis un nœud d'émission, par exemple le nœud 110, à la passerelle 141 à laquelle il est connecté, dite passerelle d'émission, sont effectués en deux temps, avec un envoi au commutateur réseau 131 auquel le nœud d'émission 110 est connecté, qui envoie à son tour les paquets de données, et le cas échéant les requêtes, à la passerelle d'émission 141.

Il en est de même pour les réponses avantageusement émises par le nœud cible, par exemple le nœud 114, lors de la phase de résolution P1 : elles sont envoyées au commutateur réseau 132 auquel le nœud cible 114 est connecté, puis à la passerelle 142, dite passerelle cible, connectée au nœud cible 114 par le commutateur réseau 132.

Les envois de paquets de données, et le cas échéant de requêtes et/ou de réponses à travers les tunnels IPsec 151, 152 et 153 sont similaires à ce qui a été décrit précédemment.

Dans le cas où les passerelles sont connectées en maillage incomplet, le procédé de communication est identique, cependant, les paquets de données transiteront éventuellement par plusieurs passerelles avant d'atteindre la passerelle cible et le nœud cible.

Les systèmes de chiffrement 20 et 140 sont avantageusement configurés en outre pour mettre en œuvre, ou pour être compatibles avec des fonctionnalités par exemple de redondance, de VLAN, de l'anglais « Virtual Local Network », de relais DHCP de l'anglais « Dynamic Host Configuration Protocol » ou de redondance globale.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Procédé de communication entre un nœud d'émission (11 ; 110) et un nœud cible (12 ; 114), appartenant à une pluralité de nœuds (11, 12, 14 ; 110, 112, 114, 116, 118, 120, 122) connectés à un même sous-réseau, via un système de chiffrement (20 ; 140), le système de chiffrement (20 ; 140) comprenant une pluralité de passerelles (21, 22, 24 ; 141, 142, 144), directement connectées entre elles via des tunnels IPsec (31, 32, 33 ; 151, 152, 153), chaque nœud (11, 12, 14 ; 110, 112, 114, 116, 118, 120, 122) étant connecté à une passerelle (21, 22, 24 ; 141, 142, 144), le nœud d'émission (11 ; 110) et le nœud cible (12 ; 114) étant connectés chacun à une passerelle différente, le procédé de communication comprenant une phase de transmission (P2) comprenant :
- un envoi (S202) d'un paquet de données par le nœud d'émission (11 ; 110) à la passerelle (21 ; 141) à laquelle il est connecté, dite passerelle d'émission ;
- un chiffrement (S206) du paquet de données par la passerelle d'émission (21 ; 141) et un envoi, (S206) par la passerelle d'émission (21 ; 141), du paquet de données chiffré à la passerelle (22 ; 142) à laquelle est connecté le nœud cible (11 ; 114), dite passerelle cible ;
- un déchiffrement (S208) du paquet chiffré et l'envoi (S210) du paquet de données déchiffré au nœud cible (12 ; 114) par la passerelle cible (22 ; 142),
**caractérisé en ce que** le paquet de données est marqué (S204) par la passerelle d'émission (21 ; 141) avec une marque correspondant à un tunnel IPsec à emprunter (31 ; 151, 152) connectant la passerelle d'émission (21 ; 141) et la passerelle cible (22 ; 142), et **en ce que** l'envoi (S206) du paquet de données chiffré par la passerelle d'émission (21 ; 141) à la passerelle cible (22 ; 142) est effectué au travers du tunnel IPsec (31 ; 151, 152) correspondant à la marque du paquet de données.

2. Procédé selon la revendication 1, dans lequel la passerelle d'émission (21 ; 141) comprend une mémoire dans laquelle une table de routage est enregistrée, et le marquage (S204), le chiffrement (S206), l'envoi (S206) et le déchiffrement (S208) sont effectués si une route cible comprenant une adresse IP associée au nœud cible (12 ; 114) et une marque correspondant au tunnel IPsec (31 ; 151, 152) connectant la passerelle d'émission (21 ; 141) et la passerelle cible (22 ; 142) est enregistrée dans la table de routage.

3. Procédé de communication selon la revendication 2, dans lequel le procédé comprend une phase de résolution (P1), comprenant :
- un marquage (S108) de requêtes de résolution par la passerelle d'émission (21 ; 141), chaque requête de résolution étant marquée avec la marque correspondant à un tunnel IPsec (31, 32 ; 151, 152, 153) différent connecté à la passerelle d'émission (21 ; 141), chaque requête comprenant une même adresse IP cible, associée au nœud cible (12 ; 114) ;
- un chiffrement (S110) des requêtes de résolution marquées et un envoi (S110) des requêtes de résolution chiffrées par la passerelle d'émission (21 ; 141), chaque requête étant envoyée à travers le tunnel IPsec correspondant à sa marque ;
- un envoi (S114) de la requête de résolution aux nœuds (12, 114, 116, 118) connectés à la passerelle cible (22 ; 142), lorsque la requête de résolution est reçue par la passerelle cible (22 ; 142) ;
- lorsque le nœud cible (12 ; 114) reçoit la requête de résolution, un envoi (S116) par le nœud cible (12 ; 114) d'une réponse comprenant une adresse MAC du nœud cible (12 ; 114) à la passerelle cible (22 ; 142) ;
- un marquage (S118) de la réponse avec la marque correspondant au tunnel IPsec (31 ; 151, 152) reliant la passerelle d'émission (21 ; 141) et la passerelle cible (22 ; 142) ;
- un chiffrement de la réponse marquée (S120) et un envoi (S120) de la réponse chiffrée à la passerelle d'émission (21 ; 141) par la passerelle cible (22 ; 142) à travers le tunnel IPsec (31 ; 151, 152) reliant la passerelle d'émission (21 ; 141) et la passerelle cible (22 ; 142) ; et
- lorsque la passerelle cible (22 ; 142) reçoit la réponse chiffrée, un ajout (S122) dans la table de routage de la passerelle cible (22 ; 142) d'une route comprenant l'adresse IP cible et la marque du tunnel IPsec (31 ; 151, 152) par lequel la réponse a été envoyée, cette route étant la route cible.

4. Procédé de communication selon la revendication 3, dans lequel lors de la phase de résolution (P1), la requête est générée par le nœud d'émission (11 ; 110) et envoyée à la passerelle d'émission (21 ; 141), et la passerelle d'émission (21 ; 141) copie la requête de résolution pour obtenir plusieurs requêtes de résolution.

5. Procédé de communication selon la revendication 3, dans lequel lorsque la requête est envoyée à la passerelle d'émission (21 ; 141), si la route cible est enregistrée, une réponse comprenant une adresse MAC de la passerelle d'émission (21 ; 141) est envoyée au nœud d'émission (11 ; 110).

6. Procédé de communication selon l'une quelconque des revendications 2 à 5, le procédé comprenant une phase de suppression (P3), comprenant :
- si l'envoi (S210) du paquet de données déchiffré au nœud cible (12 ; 114) par la passerelle cible (22 ; 142) échoue, transmission (S314) d'un paquet de données chiffré comprenant un message d'erreur à la passerelle d'émission (21 ; 141) ;
- lorsque la passerelle d'émission (21 ; 141) reçoit le paquet de données chiffré comprenant le message d'erreur, suppression (S304) de la route cible.

7. Procédé de communication selon la revendication 6, dans laquelle la phase de suppression comprend en outre :
- mesure (S302), par la passerelle d'émission (21 ; 141), d'une durée (T) depuis une dernière utilisation de la route cible ; et
- si la durée (T) depuis la dernière utilisation de la route cible est supérieure ou égale à un seuil de durée (T2), suppression (S304) de la route cible.

8. Procédé selon la revendication 2, dans lequel la passerelle d'émission (21) comprend une adresse MAC réelle et au moins une adresse MAC virtuelle, chaque adresse MAC virtuelle comprenant l'adresse MAC réelle de la passerelle d'émission (21) et une marque correspondant au tunnel IPsec à emprunter,
dans lequel lors de l'étape d'envoi (S202), le paquet de données comprend l'adresse IP cible associée au nœud cible, et l'une des au moins une adresses MAC virtuelles de la passerelle d'émission (21) ; et
dans lequel lorsque la passerelle d'émission (21) reçoit le paquet de données, si la passerelle d'émission (21) détermine qu'une route cible statique est présente dans sa table de routage, la route cible statique comprenant l'adresse IP cible, la route cible étant dépourvue de marque, et si l'adresse MAC comprise dans le paquet de données est la ou l'une des adresses MAC virtuelles, alors, lors de l'étape de marquage (S204), marquage du paquet de données avec une marque identique à la marque comprise dans l'adresse MAC virtuelle du paquet de données.

9. Système de chiffrement (20 ; 140) comprenant une pluralité de passerelles (21, 22, 24 ; 141, 142, 144), chaque passerelle (21, 22, 24 ; 141, 142, 144) étant configurée pour être connectée à au moins un nœud (11, 12, 14 ; 110, 112, 114, 116, 118, 120, 122), les nœuds (11, 12, 14 ; 110, 112, 114, 116, 118, 120, 122) appartenant à un même sous-réseau, les passerelles (21, 22, 24 ; 141, 142, 144) étant connectées entre elles via des tunnels IPsec (26, 28, 30 ; 151, 152, 153), le système (20 ; 140) étant configuré pour mettre en œuvre un procédé selon l'une quelconque des revendications précédentes.

10. Système (20 ; 140) selon la revendication 9, dans lequel chaque passerelle (21, 22, 24 ; 141, 142, 144) est connectée à chaque autre passerelle (21, 22, 24 ; 141, 142, 144) par un tunnel IPsec (26, 28, 30 ; 151, 152, 153).

11. Architecture (10 ; 100) comprenant une pluralité de nœuds (11, 12, 14 ; 110, 112, 114, 116, 118, 120, 122), les nœuds (11, 12, 14 ; 110, 112, 114, 116, 118, 120, 122) appartenant à un même sous-réseau, et comprenant un système de chiffrement (20, 140) selon la revendication 9 ou 10, chaque nœud (11, 12, 14 ; 110, 112, 114, 116, 118, 120, 122) étant connectée à l'une des passerelles (21, 22, 24 ; 141, 142, 144) du système.
